(19) **Europäisches Patentamt / European Patent Office / Office européen des brevets**

(11) **EP 3 102 410 B1**

(12) # EUROPEAN PATENT SPECIFICATION

(45) Date of publication and mention of the grant of the patent:
**18.07.2018 Bulletin 2018/29**

(51) Int Cl.:
***B32B 27/08*** *(2006.01)*     ***B32B 27/20*** *(2006.01)*
***B32B 27/32*** *(2006.01)*     ***B32B 5/14*** *(2006.01)*
***B32B 3/28*** *(2006.01)*

(21) Application number: **15703872.0**

(22) Date of filing: **03.02.2015**

(86) International application number:
**PCT/EP2015/000200**

(87) International publication number:
**WO 2015/117745 (13.08.2015 Gazette 2015/32)**

(54) **SANDWICH SHEET OR PANEL MADE OF THERMOPLASTIC MATERIAL**

AUS THERMOPLASTISCHEM KUNSTSTOFF HERGESTELLTE SANDWICHFOLIE ODER -PLATTE

FEUILLE OU PANNEAU EN SANDWICH RÉALISÉ EN MATÉRIAU THERMOPLASTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2014 IT MI20140168**

(43) Date of publication of application:
**14.12.2016 Bulletin 2016/50**

(73) Proprietor: **Imballaggi Protettivi S.r.l.**
**28100 Novara (IT)**

(72) Inventor: **ALEDI, Alessandro**
**I-26815 Masdalengo (Lodi) (IT)**

(74) Representative: **Martegani, Franco et al**
**via Carlo Alberto, 41**
**20900 Monza (IT)**

(56) References cited:
**EP-A2- 0 588 667**     **EP-B1- 2 483 071**
**WO-A1-2004/060650**     **US-A1- 2006 083 875**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a sandwich sheet or panel made of thermoplastic material.

The present invention derives from the field of sheets made of thermoplastic material destined for all applications in which the optical and preservation characteristics are fundamental, as in the case of panels or, sheets for screen and digital printing; or sandwich sheets or panels for applications which require non-transparency (coating with very low gram-weights), bifacial application (printing on both sides), lightness, shielding of solar rays (for a better resolution of the printing, to protect food, drugs, instruments, paints and all materials that can be damaged by the direct light of solar rays during transportation); for decorative elements (displays, exhibitors, folders, etc.); for sandwich sheets or panels that are applied in products that must keep their intrinsic properties (such as lightness, extreme flatness, shock-resistance) and/or processability characteristics (die-cutting capacity, weldability and direct printability) unaltered; for sandwich sheets or panels that are applied for car interiors (automotive interiors) where the internal structure should not be visible, but where total opaqueness is required.

In the industrial field of graphic printing, for example, there are no rigid honeycomb supports, made of polypropylene, capable of totally shielding sunlight even on extremely reduced thicknesses/gram-weights, which have significant advantages in terms of weight reduction, charges, transportation costs. Products that can reach the same performances as rigid honeycomb supports are known and commercialized, resorting however to the use of heterogeneous materials, such as aluminium + polyethylene (PE), cardboard + foams, etc. With the use of these materials, however, the recyclability which, on the other hand, distinguishes mono-material products (100% polypropylene), is either totally or partially lost.

The following supports are known and used in the field of screen and digital printing:

- sheets made of expanded polyvinylchloride (PVC foam), that have the advantage of having a smooth appearance, a good opaqueness and a good fire-resistance. These sheets, however, are also characterized by a high cost, a voluminous and relatively high mass, a low scratch and shock resistance;
- double-wall cannular sheets made of polypropylene (PP), obtained by extrusion from a specific die and subjected to calibration. These are substantially sheets with two or more parallel flat layers connected to each other by longitudinal walls in the extrusion direction. This type of sheet advantageously has a low voluminous mass, a high rigidity only perpendicularly to the cannulas and a much lower cost with respect to the PVC sheet. Its main disadvantage, however, is that it has an uneven and irregular surface due to the structure of the product itself. The presence of micro-grooves/irregularities, in fact, makes the surface not perfectly flat. Furthermore, when the printed sheet is placed in front of a light source, the vertical cannulas are visible in transparency and can jeopardize the quality of the printing;

- solid sheets made of polypropylene (PP) characterized by a homogeneous appearance and a good printability, but having the drawback of a low rigidity;
- sheets with a blister structure made of polypropylene (PP) such as those described in FR08161121.2 and EP2483071 (national phase of PCT/EP2010/064551). The sheets described in these patents/patent applications, however, also have various drawbacks. In the sheets described in FR08161121.2, for example, in certain applications in which the sheet is placed in front of a light source, the central film may be visible in transparency, even if there is a significant quantity of matting agent. It has also been observed that the blisters can be reflected due to an optical effect in digital or screen printing and this phenomenon is mainly observed in the case of surface layers having a low weight/sq.m or when the thicknesses of the flat walls are relatively thin.

An increase in the percentage of matting agent in the outer films does not solve the problem. Particularly poor results are obtained for low thicknesses of outer films and the presence of an excessive percentage of dye/matting agent in any case weakens the outer films and also has a negative effect on the extrusion (creating halos, excessive roughness, colour changes); the cost of the end-product, moreover, increases, also as a result of the high cost of the matting agent used in higher quantities.

A solution to this problem is object of patent application EP2483071. With the process described in this patent application, a sheet made of thermoplastic material is produced, consisting of two flat outer films and a central thermoformed blister film, with the presence of a colouring agent in a quantity sufficient for making the sheet opaque. Said dye is present in a quantity ranging from 80 to 100% by weight with respect to the total weight of the dye in the two outer films, thus making them opaque, whereas it is present in a quantity of up to 20% by weight with respect to the total weight of the dye in the central thermoformed film, making it translucent. According to EP'071, by using the dye in this way, the central film becomes "invisible", i.e. it no longer produces distortion effects (optical or surface structure) "observing" from the outer films. In this way, a sheet having an appearance similar to a compact and homogeneous sheet, is obtained, which, however, maintains all the specific mechanical properties of a sheet with a polypropylene (PP) blister structure, i.e. a much higher rigidity and, with the same surface mass, an improved shock-resistance thanks to a damping internal structure and a low voluminous mass, lower than 0,4 g/m$^3$. In this type of sheet, the use of a translucent or transparent material in the internal film abolishes the perception of blisters when the sheet is placed under a light source i.e. exposed to direct light, and also during and after the printing process.

Not even is this solution, however, completely satisfactory, especially in the case of sheets characterized by particularly reduced thicknesses/weights where the complete flatness and homogeneity of the sheet are fundamental and where it is extremely difficult to produce a product which is completely opaque to filtering light.

The objective of the present invention is to provide a thermoplastic sandwich sheet or panel which overcomes the drawbacks of the known art.

More specifically, the objective of the present invention is to provide a particular sandwich sheet or panel made of thermoplastic material, for example, polypropylene, composed of two outer films (or sides), connected to a central film (or core) consisting of a thermoformed blister film having a cylindrical form (honeycomb structure), repeated in a regular and continuous pattern, wherein the particular conformation of the central film provides the sheet with its mechanical properties, load resistance and functional characteristics; said sheet being completely flat, homogeneous and opaque to filtering light, also with particularly reduced thicknesses/weights.

The objective of the present invention is therefore to provide a sandwich sheet or panel made of thermoplastic material which has extremely high optical "shielding" levels, which have never been reached with a honeycomb product.

The object of the present invention therefore relates to a sandwich sheet or panel made of thermoplastic material comprising two flat outer films, thermowelded to a central film consisting of a thermoformed blister film, repeated in a regular and continuous pattern, said flat outer films consisting of a coextruded two-layered film (AC) wherein the inner layer (A), facing the thermoformed central film, is a shielding layer and the central thermoformed blister film consists of a coextruded three-layered film (ABA), wherein the two outer layers (A), facing the flat outer films, are shielding layers.

In the description of the present invention, the term "film" refers to a film that can be composed of either only one layer or at least two layers having a different or the same composition.

In the present description, the term "shielding" means opaque to filtering light, not transparent.

The thermoplastic material is preferably based on polyolefins, even more preferably polypropylene.

In particular, the sandwich sheet or panel according to the present invention has the following structure CA/ABA/AC wherein

|  |  |  |
|---|---|---|
|  | Layer C | Film |
| Flat outer coextruded film (CA) | Layer A | top |
|  | Layer A |  |
| Central coextruded film (ABA) | Layer B |  |
|  | Layer A |  |
| Flat outer coextruded film (AC) | Layer A | Film |
|  | Layer C | bottom |

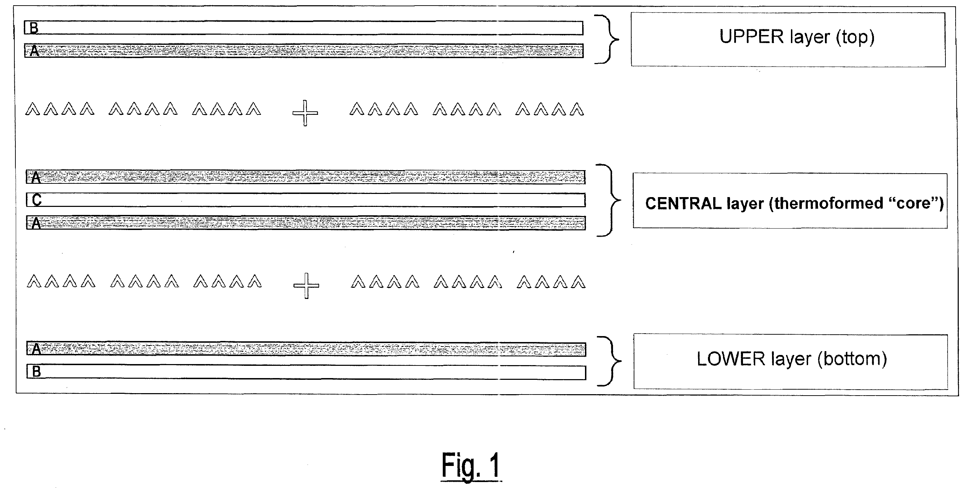

also represented in Figure 1.

More specifically, the flat outer film is a coextruded two-layer film, having a structure AC, composed of an inner layer (A) and an outer layer (C), wherein the inner layer (A) is extruded from an extrusion mixture comprising from 90% to 99.5% by weight of polypropylene ligand having a fluidity index at 230°C - 2.16 kg ranging from 2 to 6 g/10 min and from 0.5% to 10% by weight of a master mixture containing a colouring agent, the weight percentages being indicated with respect to the total weight of the extrusion mixture of layer A; and the outer layer (C) is extruded from an extrusion mixture comprising from 25% to 70% by weight of polypropylene copolymer, having a fluidity index at 230°C - 2.16 kg ranging from 2 to 6 g/10 min; from 10% to 50% by' weight of polypropylene homopolymer having a fluidity index at 230°C - 2.16 kg ranging from 2 to 8 g/10 min; from 5% to 40% by weight of a master mixture containing a stiffening agent which comprises micronized talc on a. polyolefin base; from 0.5% al 10% by weight of a master mixture containing a colouring agent, from 0 to 5% by weight of an anti-UV master mixture, the weight percentages being indicated with respect to the total weight of the extrusion mixture of layer C.

The stiffening agent comprises from 40% to 60% by weight of micronized talc on a polyolefin base (polyolefin being the complement to 100).

The anti-UV master mixture preferably contains 20% of HALS (UV stabilizers based on FREE amines).

The outer layer (C) is preferably extruded from an extrusion mixture comprising from 50% to 70% by weight of polypropylene copolymer having a fluidity index at 230°C - 2.16 kg ranging from 2 to 6 g/10 min; from 15% to 30% by weight of polypropylene homopolymer having a fluidity index at 230°C - 2.16 kg ranging from 2 to 8 g/10 min; from 10% to 20% by weight of a master mixture containing a stiffening agent which comprises micronized talc on a polyolefin base; from 0.5% to 6% by weight of a master mixture containing a colouring agent; from 0.5 % to 3% by weight of an anti-UV master mixture, the weight percentages being indicated with respect to the total weight of, the extrusion mixture of layer C.

The central film, consisting of a thermoformed blister film having a cylindrical, conical, pyramidal form or other geometrical forms, preferably cylindrical, repeated in a regular and continuous pattern, is a coextruded three-layered film, having a structure ABA, composed of an inner layer (B) and two outer layers (A), wherein the inner layer (B) is extruded from an extrusion mixture comprising from 20% to 100% by weight of neutral and/or recycled polypropylene copolymer, having a fluidity index at 230°C - 2.16 kg ranging from 2 to 6 g/10 min; from 0% to 80% by weight of neutral and/or recycled polypropylene homopolymer having a fluidity index at 230°C - 2.16 kg ranging from 2 to 8 g/10 min; the weight percentages being indicated with respect to the total weight of the extrusion mixture of layer B; and the outer layer (A) is extruded from an extrusion mixture comprising from 90% to 99.5% by weight of polypropylene ligand having a fluidity index at 230°C - 2.16 kg ranging from 2 to 6 g/10 min and from 0.5% to 10% by weight of a master mixture containing a colouring agent, the weight percentages being indicated with respect to the total weight of the extrusion mixture of layer A.

The term recycled polypropylene conventionally refers to any type of polypropylene coming from other processings.

The inner layer (B) is preferably extruded from an extrusion mixture comprising from 20% to 80% by weight of polypropylene copolymer, having a fluidity index at 230°C - 2.16 kg ranging from 2 to 6 g/10 min; from 10% to 50% by weight of recycled polypropylene having a fluidity index at 230°C - 2.16 kg ranging from 2 to 6 g/10 min and from 20% to 40% by weight of polypropylene homopolymer having a fluidity index ranging from 2 to 8 g/10 min; the weight percentages being indicated with respect to the total weight of the extrusion mixture of layer B.

The master mixture containing a colouring agent present in the starting mixture of layer A can have a chemical composition the same as or different from the master mixture containing a colouring agent present in the starting mixture of layer C. The two master mixtures present in the starting mixture of layer A and in the starting mixture of layer C preferably have the same chemical composition and differ in colour.

The master mixture containing a colouring agent present in the starting mixture of layer A is preferably black, grey, green, with colours characterized by different values according to the RAL scale.

The master mixture containing a colouring agent present in the starting mixture of layer C is preferably white and, the colouring agent is even more preferably titanium dioxide.

The sandwich sheet or panel according to the present invention is produced, for example, by means of the process described in patent EP1638770.

The sheet or panel according to the present invention has a weight ranging from 300 g/m$^2$ to 4500 g/m$^2$, preferably ranging from 400 g/m$^2$ to 2000 g/m$^2$.

The sheet or panel according to the present invention has a thickness ranging from 2.00 to 15.0 mm, preferably ranging from 2.00 to 10.00 mm.

The blisters present in the central thermoformed layer have a diameter ranging from 3.00 to 18.00 mm, preferably ranging from 3.50 to 12 mm and the height of the protrusions/blisters varies and depends on the diameter of the same, for example the height being 3.00 mm for a diameter of 3.5 mm and 5.00 mm for a diameter of 8.00 mm.

The layers A, B and C can have the same or a different thickness and said thickness ranges from 80 microns to 1.15 mm.

The present invention is therefore based on a completely opposite concept with respect to the known solutions, which surprisingly allows improved results to be obtained relating to external perception (extreme flatness, homogeneity, etc.), with the further advantage of completely eliminating filtering light.

In this way, the honeycomb structure of the central film cannot be perceived, not even in the case of sheets with reduced thicknesses/weight which formerly represented "critical" cases in which this technical problem had not been solved by the state of the art.

More specifically, the sandwich sheet or panel, object of the present invention, is composed of three films, of which the central film is thermoformed (creating "cylindrical" blisters with a regular pattern), and then thermowelded to the two flat, shielding outer films.

The binding layers (A), present in both the central thermoformed film as outer layers facing the flat outer films, and also in the flat outer films as internal layer that faces the central thermoformed film, are suitably co-extruded from an extrusion mixture comprising, as specified above, shielding master mixtures, i.e. a master mixture containing a colouring agent, preferably black.

This allows an end-product to be produced, a sheet or panel, in which the flat outer films have a shielding layer (facing internally), uniformly distributed over the whole surface. The end-product, sheet or panel, is, on the other hand, completely white towards the outside.

The whiteness gradient is improved with respect- to sheets which do not have this type of co-extrusion as the central opaqueness is fundamental.

The sheet or panel, object of the present invention, is mainly applied in the fields of graphics, automotive interiors and pharmaceutical/food packaging.

Other characteristics and advantages of the invention will appear evident from the following examples provided for purely illustrative and non-limiting purposes.

Example 1

Sheet with a weight of 600 g/m$^2$
Diameter of blister: 4 mm

Composition of the outer films (upper/top and lower/bottom) :

Layer C:

70% PP copolymer (fluidity index = 5 g/10 min);
10% PP homopolymer (fluidity index = 5 g/10 min);
15% master mixture comprising 40% of talc;
5% white master mixture comprising 75% of titanium dioxide.

Layer A:

98% PP ligand (fluidity index = 5 g/10 min);
2% shielding master mixture (black dye)

Composition of central film:

Layer B:

89.5% PP copolymer (fluidity index = 5 g/10 min)
10% PP homopolymer (fluidity index = 5.00 g/10min)
0.5 % recycled PP (production trimming of the film as described above).

Layer A has the same composition indicated above for the bottom and top films.
Weight distribution of the films:

```
Upper film /central film /lower film = 40/20/40%.
```

Comparative example 1

A sheet was produced, which was the same as that according to the previous Example 1 with the only difference that the layer A consists for 100% of PP ligand (fluidity index = 5 g/10 min).

Example 2

Sheet with a weight of 900 g/m$^2$
Diameter of blister: 4 mm

Composition of the outer films (upper/top and lower/bottom) :

Layer C:

67% PP block copolymer (fluidity index = 5 g/10 min);
10% PP homopolymer (fluidity index = 5 g/10 min);
15% master mixture comprising 40% of talc;
6% white master mixture comprising 60% of titanium dioxide;
2% of anti-UV master mixture containing 20% of HALS.

Layer A:

97% PP ligand (fluidity index = 5 g/10 min);
3% shielding master mixture (black dye)

Composition of central film:

Layer B:

89.5% PP copolymer (fluidity index = 5 g/10 min)
10% PP homopolymer (fluidity index = 5.00 g/10min)
0.5 % recycled PP (production trimming of the film as described above).

Layer A has the same composition indicated above for the bottom and top films.
Weight distribution of the films:

```
Upper film /central film /lower film = 40/20/40%.
```

Comparative example 2

A sheet was produced, which was the same as that according to the previous Example 2 with the only difference that the layer A consists for 100% of PP ligand (fluidity index = 5 g/10 min).
The following tables 1-3 indicate the data relating to the sheets of Examples 1 and 2 according to the present invention, Comparative examples 1 and 2 described in the present patent application and Examples 1 and 2 described in the prior document WO2011/039303 The total quantities of titanium dioxide and talc (overall rate %) are indicated with respect to the total weight of the sheet.
The light transmission according to ASTM D1003-13 was measured for all of the sheets.
The superiority of the sheets according to the present invention, obtained in Examples 1 and 2, is immediately evident: the light transmission values, in the presence of minimum quantities of shielding master mixture, are much lower than those present in the sheets according to the comparative examples of the present invention and according to the examples of the state of the art.
A sandwich sheet or panel made of thermoplastic ma-, terial, specifically polypropylene, is thus obtained, wherein the particular conformation of the central film provides the sheet with its mechanical properties, load resistance and functional characteristics; said sheet being completely flat, homogeneous and opaque to filtering light, also with particularly reduced thicknesses/weights, thanks to the multilayer structure of the central film and bottom and top films which envisages a particular arrangement of the layer A, comprising the shielding master mixture. In the following Tables 2 and 3 respectively, "Example 2 according to WO2011/038303" should read "Example 2 according to WO2011/039303", and "Example 1 according to WO2011/038303" should read "Example 1 according to WO2011/039303".

Table 1

| | | Comp. Example 2 3 mm | | | EXAMPLE 2 3 mm | | | Comp. Example 1. 2.6 mm | | | EXAMPLE 1 2.6 mm | | |
|---|---|---|---|---|---|---|---|---|---|---|---|---|---|
| Thickness - mm | | 3.0 | | | 3.0 | | | 2.6 | | | 2.6 | | |
| Mass - g/m² | | 900 | | | 900 | | | 600 | | | 600 | | |
| Density - g/cm³ | | 0.30 | | | 0.30 | | | 0.23 | | | 0.23 | | |
| Composition - % | | A | B | C | A | B | C | A | B | C | A | B | C |
| | PP Copolymer | | 89.5 | 67.0 | | 89.5 | 67.0 | | 89.5 | 70.0 | | 89.5 | 70.0 |
| | PP homopolymer | | 10.0 | 10.0 | | 10.0 | 10.0 | | 10.0 | 10.0 | | 10.0 | 10.0 |
| | PP + Talc | | | 15.0 | | | 15.0 | | | 15.0 | | | 15.0 |
| | Recycled PP | | 0.5 | | | 0,5 | | | 0.5 | | | 0.5 | |
| | RAL Master | | | 6.0 | | | 6.0 | | | 5.0 | | | 5.0 |
| | UV Master | | | 2.0 | | | 2.0 | | | | | | |
| | PP Ligand | 100.0 | | | 97,0 | | | 100.0 | | | 98.0 | | |
| | Shielding Master | | | | 3,0 | | | | | | 2.0 | | |
| | Layer distribution | 40/20/40 | | | 40/20/40 | | | 40/20/40 | | | 40/20/40 | | |
| Overall rate of white pigment (Titanium dioxide) - % | | 2.9 | | | 2.9 | | | 2.4 | | | 2.4 | | |
| Overall rate of mineral filler (Talc) - % | | 4.8 | | | 4.8 | | | 4.8 | | | 4.8 | | |
| Light transmission - % | | 1.46 ± 0.12 | | | 0.02 ± 0.01 | | | 25.88 ± 0.18 | | | 0.06 ± 0.01 | | |

Table 2

| | | Comp. Example 2 3 mm | | | EXAMPLE 2 3 mm | | | Example 2 according to-WO2011/038303 | | |
|---|---|---|---|---|---|---|---|---|---|---|
| Thickness - mm | | 3.0 | | | 3.0 | | | 3.0 | | |
| Mass - g/m$^2$ | | 900 | | | 900 | | | 900 | | |
| Density - g/cm$^3$ | | 0.30 | | | 0.30 | | | 0.30 | | |
| Composition - % | | A | B | C | A | B | C | A | B | C |
| | PP Copolymer | | 89.5 | 67.0 | | 89.5 | 67.0 | | | |
| | PP homopolymer | | 10.0 | 10.0 | | 10.0 | 10.0 | | | |
| | PP + Talc | | | 15.0 | | | 15.0 | | | |
| | Recycled PP | | 0.5 | | | 0.5 | | | | |
| | RAL Master | | | 6.0 | | | 6.0 | | | |
| | UV Master | | | 2.0 | | | 2.0 | | | |
| | PP Ligand | 100.0 | | | 97.0 | | | | | |
| | Shielding Master | | | | 3.0 | | | | | |
| | Layer distribution | 40/20/40 | | | 40/20/40 | | | | | |
| Overall rate of white pigment (Titanium dioxide) - % | | 2.9 | | | 2.9 | | | 2.8 | | |
| Overall rate of mineral filler (Talc) - % | | 4.8 | | | 4.8 | | | 9.4 | | |
| Light transmission - % | | 1.46 ± 0.12 | | | 0. 02 ± 0.01 | | | 1.6 | | |

Table 3

| | Comp. Example 1 2.6 mm | | | EXAMPLE 1 2.6 mm | | | Example 1 according to WO2011/038303 |
|---|---|---|---|---|---|---|---|
| Thickness - mm | 2.6 | | | 2.6 | | | 2.6 |
| Mass - g/m² | 600 | | | 600 | | | 600 |
| Density - g/cm³ | 0.23 | | | 0.23 | | | 0.23 |
| Composition - % | A | B | C | A | B | C | |
| PP Copolymer | | 89.5 | 70.0 | | 89.5 | 70.0 | |
| PP homopolymer | | 10.0 | 10.0 | | 10.0 | 10.0 | |
| PP + Talc | | | 15.0 | | | 15.0 | |
| Recycled PP | | 0.5 | | | 0.5 | | |
| RAL Master | | | 5.0 | | | 5.0 | |
| UV Master | | | | | | | |
| PP Ligand | 100.0 | | | 98.0 | | | |
| Shielding Master | | | | 2.0 | | | |
| Layer distribution | 40/20/40 | | | 40/20/40 | | | |
| Overall rate of white pigment (Titanium dioxide) - % | 2.4 | | | 2.4 | | | 2.9 |
| Overall rate of mineral filler (Talc) - % | 4.8 | | | 4.8 | | | 9.4 |
| Light transmission - % | 25. 88 ± 0.18 | | | 0.06 ± 0.01 | | | 5.8 |

## Claims

1. A sandwich sheet or panel made of thermoplastic material comprising two flat outer films, thermowelded to a central film **characterized in that** said central film consists of a thermoformed blister film, repeated in a regular and continuous pattern, said flat outer films consisting of a coextruded two-layered film (AC) wherein the inner layer (A), facing the central thermoformed film, is a shielding layer and the central thermoformed blister film consists of a coextruded three-layered film (ABA), wherein the two outer layers (A), facing the flat outer films, are shielding layers, a shielding layer being a not transparent layer, opaque to filtering light.

2. The sheet according to claim 1, wherein the thermoplastic material is based on polyolefins and preferably polypropylene.

3. The sheet according to claim 1 or 2, wherein said sheet has the following structure CA/ABA/AC wherein

|  |  |  |
|---|---|---|
|  | Layer C | Film |
| Flat outer coextruded film (CA) | Layer A | top |
|  | Layer A |  |
| Central coextruded film (ABA) | Layer B |  |
|  | Layer A |  |
| Flat outer coextruded film (AC) | Layer A | Film |
|  | Layer C | bottom |

4. The sheet according to any of the previous claims 1-3, wherein the flat outer film is a coextruded two-layered film, having a structure AC, composed of an inner layer (A) and an outer layer (C), wherein the inner layer (A) is extruded from an extrusion mixture comprising from 90% to 99.5% by weight of polypropylene ligand having a fluidity index at 230°C - 2.16 kg ranging from 2 to 6 g/10 min and from 0.5% to 10% by weight of a master mixture containing a colouring agent, the weight percentages being indicated with respect to the total weight of the extrusion mixture of layer A;
and the outer layer (C) is extruded from an extrusion mixture comprising from 25% to 70% by weight of polypropylene copolymer, having a fluidity index at 230°C - 2.16 kg ranging from 2 to 6 g/10 min; from 10% to 50% by weight of polypropylene homopolymer having a fluidity index at 230°C - 2.16 kg ranging from 2 to 8 g/10 min; from 5% to 40% by weight of a master mixture containing a stiffening agent which comprises micronized talc on a polyolefin base; from 0.5% to 10% by weight of a master mixture containing a colouring agent, from 0 to 5% by weight of an anti-UV master mixture, the weight percentages being indicated with respect to the total weight of the extrusion mixture of layer C.

5. The sheet according to any of the previous claims 1-4, wherein the stiffening agent comprises from 40% to 60% by weight of micronized talc on a polyolefin base (complement to 100).

6. The sheet according to any of the previous claims 1-5, wherein the outer layer (C) is extruded from an extrusion mixture comprising from 50% to 70% by weight of polypropylene copolymer having a fluidity index at 230°C - 2.16 kg ranging from 2 to 6 g/10 min; from 15% to 30% by weight of polypropylene homopolymer having a fluidity index at 230°C - 2.16 kg ranging from 2 to 8 g/10 min; from 10% to 20% by weight of a master mixture containing a stiffening agent which comprises micronized talc on a polyolefin base; from 0.5% to 6% by weight of a master mixture containing a colouring agent; from 0.5 % to 3% by weight of an anti-UV master mixture, the weight percentages being indicated with respect to the total weight of the extrusion mixture of layer C.

7. The sheet according to any of the previous claims 1-6, wherein the central film, consisting of a thermoformed blister film having a cylindrical, conical, pyramidal form or other geometrical forms, preferably cylindrical, repeated in a regular and continuous pattern, is a coextruded three-layered film, having a structure ABA, composed of an inner layer (B) and two outer layers (A), wherein the inner layer (B) is extruded from an extrusion mixture comprising from 20% to 100% by weight of neutral and/or recycled polypropylene copolymer, having a fluidity index at 230°C - 2.16 kg ranging from 2 to 6 g/10 min; from 0% to 80% by weight of neutral and/or recycled polypropylene homopolymer having a fluidity index at 230°C - 2.16 kg ranging from 2 to 8 g/10 min; the weight percentages being indicated with respect to the total weight of the extrusion mixture of layer B; and the outer layer (A) is extruded from an extrusion mixture comprising from 90% to 99.5% by weight of polypropylene ligand having a fluidity index at 230°C - 2.16 kg ranging from 2 to 6 g/10 min and from 0.5% to 10% by weight of a master mixture containing a colouring agent, the weight percentages being indicated with respect to the total weight of the extrusion mixture of layer A.

8. The sheet according to any of the previous claims 1-7, wherein the inner layer (B) of the central film is extruded from an extrusion mixture comprising from 20% to 80% by weight of polypropylene copolymer, having a fluidity index at 230°C - 2.16 kg ranging from 2 to 6 g/10 min; from 10% to 50% by weight of recycled polypropylene having a fluidity index at 230°C - 2.16 kg ranging from 2 to 6 g/10 min and from 20% to 40% by weight of polypropylene homopolymer having a fluidity index ranging from 2 to 8 g/10 min; the weight percentages being indicated with respect to the total weight of the extrusion mixture of layer B.

9. The sheet according to any of the previous claims 18, wherein the master mixture containing a colouring agent present in the starting mixture of layer A has a chemical composition the same as or different from the master mixture containing a colouring agent present in the starting mixture of layer C, preferably the two master mixtures present in the starting mixture of layer A and in the starting mixture of layer C have the same chemical composition and differ in colour.

10. The sheet according to any of the previous claims 1-9, wherein the master mixture containing a colouring agent present in the starting mixture of layer A is black, grey, green, with colours **characterized by** different values according to the RAL scale.

11. The sheet according to any of the previous claims 1-10, wherein the master mixture containing a colouring agent present in the starting mixture of layer C is white, the colouring agent is preferably titanium dioxide.

**Patentansprüche**

1. Aus thermoplastischem Material hergestellte Sandwichfolie oder -platte, umfassend zwei ebene äußere Filme, die an einen zentralen Film thermogeschweißt sind, **dadurch gekennzeichnet, dass** der zentrale Film aus einem thermogeformten Blisterfilm besteht, wiederholt in einem regelmäßigen und kontinuierlichen Muster, wobei die ebenen äußeren Filme aus einem koextrudierten, zweischichtigen Film (AC) bestehen, wobei die innere Schicht (A), die dem zentralen thermogeformten Film zugewandt ist, eine Abschirmschicht ist, und der zentrale thermogeformte Blisterfilm aus einem koextrudierten, dreischichtigen Film (ABA) besteht, wobei die zwei äußeren Schichten (A), die dem ebenen äußeren Film zugewandt sind, Abschirmschichten sind, wobei eine Abschirmschicht eine nichttransparente Schicht ist, die für Filterlicht undurchlässig ist.

2. Folie nach Anspruch 1, wobei das thermoplastische Material auf Polyolefinen und bevorzugt Polypropylen beruht.

3. Folie nach Anspruch 1 oder 2, wobei die Folie die folgende Struktur aufweist CA/ABA/AC, wobei

|  | | |
|---|---|---|
|  | Schicht C | Film oben |
| Ebener äußerer koextrudierter Film (CA) | Schicht A | |
|  | Schicht A | |
| Zentraler koextrudierter Film (ABA) | Schicht B | |
|  | Schicht A | |
| Ebener äußerer koextrudierter Film (AC) | Schicht A | Film unten |
|  | Schicht C | |

4. Folie nach einem der vorhergehenden Ansprüche 1 bis 3, wobei der ebene äußere Film ein koextrudierter, zweischichtiger Film ist, der eine Struktur AC aufweist, der aus einer inneren Schicht (A) und einer äußeren Schicht (C) besteht, wobei die innere Schicht (A) extrudiert ist aus einer Extrusionsmischung, umfassend von 90-Gewichts-% bis 99,5 Gewichts-% eines Polypropylenliganden mit einem Fluiditätsindex bei 230°C - 2,16 kg im Bereich von 2 bis 6 g/10 min und von 0,5 Gewichts-% bis 10 Gewichts-% einer Hauptmischung, enthaltend einen Farbstoff, wobei die Gewichtsprozentsätze mit Bezug auf das Gesamtgewicht der Extrusionsmischung der Schicht A angegeben sind; und die äußere Schicht (C) extrudiert ist aus einer Extrusionsmischung, umfassend von 25 Gewichts-% bis 70 Gewichts-% eines Polypropylencopolymers mit einem Fluiditätsindex bei 230°C - 2,16 kg im Bereich von 2 bis 6 g/10 min; von 10 Gewichts-% bis 50 Gewichts-% eines Polypropylenhomopolymers mit einem Fluiditätsindex bei 230°C - 2,16 kg im Bereich von 2 bis 8 g/10 min; von 5 Gewichts-% bis 40 Gewichts-% einer Hauptmischung, enthaltend ein Versteifungsmittel, das mikronisierten Talk auf einer Polyolefinbasis umfasst; von 0,5 Gewichts-% bis 10 Gewichts-% einer Hauptmischung, enthaltend einen Farbstoff, von 0 bis 5 Gewichts-% einer UV-Schutz-Hauptmischung, wobei die Gewichtsprozentsätze mit Bezug auf das Gesamtgewicht der Extrusionsmischung der Schicht C angegeben sind.

5. Folie nach einem der vorhergehenden Ansprüche 1 bis 4, wobei das Versteifungsmittel von 40 Gewichts-% bis 60 Gewichts-% eines mikronisierten Talks auf einer Polyolefinbasis (Komplement zu 100) umfasst.

6. Folie nach einem der vorhergehenden Ansprüche 1 bis 5, wobei die äußere Schicht (C) extrudiert ist aus einer Extrusionsmischung, umfassend 50 Gewichts-% bis 70 Gewichts-% eines Polypropylencopolymers mit einem Fluiditätsindex bei 230°C - 2,16 kg im Bereich von 2 bis 6 g/10 min; von 15 Gewichts-% bis 30 Gewichts-% eines Polypropylenhomopolymers mit einem Fluiditätsindex bei 230°C - 2,16 kg im Bereich von 2 bis 8 g/10 min; von 10 Gewichts-% bis 20 Gewichts-% einer Hauptmischung, enthaltend ein Versteifungsmittel, das mikronisierten Talk auf Polyolefinbasis umfasst; von 0,5 Gewichts-% bis 6 Gewichts-% einer Hauptmischung, enthaltend einen Farbstoff; von 0,5 Gewichts-% bis 3 Gewichts-% einer UV-Schutz-Hauptmischung, wobei die Gewichtsprozentsätze mit Bezug auf das Gesamtgewicht der Extrusionsmischung der Schicht C angegeben sind.

7. Folie nach einem der vorhergehenden Ansprüche 1 bis 6, wobei der zentrale Film, der aus einem thermogeformten Blisterfilm mit einem zylindrischen, konischen, pyramidalen Form oder anderen geometrischen Formen, vorzugsweise zylindrisch, wiederholt in einem regelmäßigen oder kontinuierlichen Muster besteht, ein koextrudierter dreischichtiger Film mit einer Struktur ABA ist, zusammengesetzt aus einer inneren Schicht (B) und zwei äußeren Schichten (A), wobei die innere Schicht (B) extrudiert ist aus einer Extrusionsmischung, umfassend von 20 Gewichts-% bis 100 Gewichts-% eines neutralen und/oder recycelten Polypropylencopolymers, das einen Fluiditätsindex bei 230°C - 2,16 kg im Bereich von 2 bis 6 g/10 min aufweist; von 0 Gewichts-% bis 80 Gewichts-% eines neutralen und/oder recycelten Polypropylenhomopolymers mit einem Fluiditätsindex bei 230°C - 2,16 kg im Bereich von 2 bis 8 g/10 min; wobei die Gewichtsprozentsätze mit Bezug auf das Gesamtgewicht der Extrusionsmischung der Schicht B angegeben sind;
und die äußere Schicht (A) extrudiert ist aus einer Extrusionsmischung, umfassend von 90 Gewichts-% bis 99,5 Gewichts-% eines Polypropylenliganden mit einem Fluiditätsindex bei 230°C - 2,16 kg im Bereich von 2 bis 6 g/10 min und von 0,5 Gewichts-% bis 10 Gewichts-% einer Hauptmischung, enthaltend einen Farbstoff, wobei die Gewichtsprozentsätze mit Bezug auf das Gesamtgewicht der Extrusionsmischung der Schicht A angegeben sind.

8. Folie nach einem der vorhergehenden Ansprüche 1 bis 7, wobei die innere Schicht (B) des zentralen Films extrudiert ist aus einer Extrusionsmischung, umfassend von 20 Gewichts-% bis 80 Gewichts-% eines Polypropylencopolymers mit einem Fluiditätsindex bei 230°C - 2,16 kg im Bereich von 2 bis 6 g/10 min; von 10 Gewichts-% bis 50 Gewichts-% eines recycelten Polypropylens mit einem Fluiditätsindex bei 230°C - 2,16 kg im Bereich von 2 bis 6 g/10 min und von 20 Gewichts-% bis 40 Gewichts-% eines Polypropylenhomopolymers mit einem Fluiditätsindex im Bereich von 2 bis 8 g/10 min; wobei die Gewichtsprozentsätze mit Bezug auf das Gesamtgewicht der Extrusionsmischung der Schicht B angegeben sind.

9. Folie nach einem der vorhergehenden Ansprüche 1 bis 8, wobei die Hauptmischung, die einen Farbstoff enthält, der in der Ausgangsmischung der Schicht A vorhanden ist, eine chemische Zusammensetzung aufweist, die gleich oder verschieden ist von der Hauptmischung, die einen Farbstoff enthält, der in der Ausgangsmischung der Schicht C vorhanden ist, vorzugsweise die zwei Hauptmischungen, die in der Ausgangsmischung der Schicht A und der Ausgangsmischung der Schicht C vorhanden sind, die gleiche chemische Zusammensetzung aufweisen und sich in der Farbe unterscheiden.

10. Folie nach einem der vorhergehenden Ansprüche 1 bis 9, wobei die Hauptmischung, die einen Farbstoff enthält, der in der Ausgangsmischung der Schicht A vorhanden ist, schwarz, grau, grün ist, wobei die Farben sich durch unterschiedliche Werte gemäß der RAL-Skala auszeichnen.

11. Folie nach einem der vorhergehenden Ansprüche 1 bis 10, wobei die Hauptmischung, die einen Farbstoff enthält, der in der Ausgangsmischung der Schicht C vorhanden ist, weiß ist, wobei der Farbstoff vorzugsweise Titandioxid ist.

**Revendications**

1. Feuille ou panneau sandwich en matériau thermoplastique, comprenant deux films externes plats thermo-soudés à un film central, caractérisé(e) en ce que ledit film central consiste en un film à bulles thermoformé à motif répété en un dessin régulier continu, lesdits films externes plats consistent chacun en un film bicouche coextrudé (AC) où la couche interne (A) qui fait face au film central thermoformé est une couche écran, et le film à bulles central thermoformé consiste en un film tricouche coextrudé (ABA) dont les deux couches externes (A) qui font face aux films externes plats sont des couches écrans, étant entendu qu'une couche écran est une couche non transparente et opaque à la lumière filtrante.

2. Feuille conforme à la revendication 1, dans laquelle le matériau thermoplastique est à base de polyoléfines, et de préférence du polypropylène.

3. Feuille conforme à la revendication 1 ou 2, laquelle feuille présente la structure suivante : CA/ABA/AC, soit

|  | | |
|---|---|---|
|  | Couche C | haut du film |
| Film plat coextrudé externe (CA) | Couche A | |
|  | Couche A | |
| Film central coextrudé (ABA) | Couche B | |
|  | Couche A | |
| Film plat coextrudé externe (AC) | Couche A | |
|  | Couche C | bas du film |

4. Feuille conforme à l'une des revendications 1 à 3 précédentes, dans laquelle le film plat externe est un film bicouche coextrudé présentant une structure AC, formé d'une couche interne (A) et d'une couche externe (C), et dans laquelle :

   - la couche interne (A) est obtenue par extrusion d'un mélange comprenant de 90 à 99,5 % en poids d'un polypropylène de liaison qui présente un indice de fluidité valant, à 230 °C sous 2,16 kg, de 2 à 6 g/10 min et de 0,5 à 10 % en poids d'un mélange-maître contenant un agent colorant, étant entendu que ces pourcentages en poids sont rapportés au poids total du mélange pour extrusion de la couche (A),
   - et la couche externe (C) est obtenue par extrusion d'un mélange comprenant de 25 à 70 % en poids d'un copolymère polypropylène qui présente un indice de fluidité valant, à 230 °C sous 2,16 kg, de 2 à 6 g/10 min, de 10 à 50 % en poids d'un homopolymère polypropylène qui présente un indice de fluidité valant, à 230 °C sous 2,16 kg, de 2 à 8 g/10 min, de 5 à 40 % en poids d'un mélange-maître contenant un agent de renforcement, à base de polyoléfine et comprenant du talc micronisé, de 0,5 à 10 % en poids d'un mélange-maître contenant un agent colorant, et de 0 à 5 % en poids d'un mélange-maître anti-UV, étant entendu que ces pourcentages en poids sont rapportés au poids total du mélange pour extrusion de la couche (C).

5. Feuille conforme à l'une des revendications 1 à 4 précédentes, dans laquelle l'agent de renforcement comprend de 40 à 60 % en poids de talc micronisé, avec la polyoléfine de base pour complément à 100 %.

6. Feuille conforme à l'une des revendications 1 à 5 précédentes, dans laquelle la couche externe (C) est obtenue par extrusion d'un mélange comprenant de 50 à 70 % en poids d'un copolymère polypropylène qui présente un indice de fluidité valant, à 230 °C sous 2,16 kg, de 2 à 6 g/10 min, de 15 à 30 % en poids d'un homopolymère polypropylène qui présente un indice de fluidité valant, à 230 °C sous 2,16 kg, de 2 à 8 g/10 min, de 10 à 20 % en poids d'un mélange-maître contenant un agent de renforcement, à base de polyoléfine et comprenant du talc micronisé, de 0,5 à 6 % en poids d'un mélange-maître contenant un agent colorant, et de 0,5 à 3 % en poids d'un mélange-maître anti-UV, étant entendu que ces pourcentages en poids sont rapportés au poids total du mélange pour extrusion de la couche (C).

7. Feuille conforme à l'une des revendications 1 à 6 précédentes, dans laquelle le film central consistant en un film à bulles thermoformé, doté d'un motif de forme cylindrique, conique ou pyramidale ou d'une autre forme géométrique, répété en un dessin régulier continu, est un film tricouche coextrudé possédant une structure ABA, composé d'une couche interne (B) et de deux couches externes (A), et dans laquelle

- la couche interne (B) est obtenue par extrusion d'un mélange comprenant de 20 à 100 % en poids d'un copolymère polypropylène neutre et/ou recyclé, qui présente un indice de fluidité valant, à 230 °C sous 2,16 kg, de 2 à 6 g/10 min, et de 0 à 80 % en poids d'un homopolymère polypropylène neutre et/ou recyclé, qui présente un indice de fluidité valant, à 230 °C sous 2,16 kg, de 2 à 8 g/10 min, étant entendu que ces pourcentages en poids sont rapportés au poids total du mélange pour extrusion de la couche (B),

- et la couche externe (A) est obtenue par extrusion d'un mélange comprenant de 90 à 99,5 % en poids d'un polypropylène de liaison qui présente un indice de fluidité valant, à 230 °C sous 2,16 kg, de 2 à 6 g/10 min et de 0,5 à 10 % en poids d'un mélange-maître contenant un agent colorant, étant entendu que ces pourcentages en poids sont rapportés au poids total du mélange pour extrusion de la couche (A).

8. Feuille conforme à l'une des revendications 1 à 7 précédentes, dans laquelle la couche interne (B) du film central est obtenue par extrusion d'un mélange comprenant de 20 à 80 % en poids d'un copolymère polypropylène qui présente un indice de fluidité valant, à 230 °C sous 2,16 kg, de 2 à 6 g/10 min, de 10 à 50 % en poids d'un polypropylène recyclé qui présente un indice de fluidité valant, à 230 °C sous 2,16 kg, de 2 à 6 g/10 min, et de 20 à 40 % en poids d'un homopolymère polypropylène qui présente un indice de fluidité valant de 2 à 8 g/10 min, étant entendu que ces pourcentages en poids sont rapportés au poids total du mélange pour extrusion de la couche (B).

9. Feuille conforme à l'une des revendications 1 à 8 précédentes, dans laquelle la composition chimique du mélange-maître contenant un agent colorant présent dans le mélange de départ pour la couche A est identique à ou différente de celle du mélange-maître contenant un agent colorant présent dans le mélange de départ pour la couche C, et de préférence, les deux mélanges-maîtres présents dans le mélange de départ pour la couche A et dans le mélange de départ pour la couche C ont la même composition chimique, mais des couleurs différentes.

10. Feuille conforme à l'une des revendications 1 à 9 précédentes, dans laquelle le mélange-maître contenant un agent colorant présent dans le mélange de départ pour la couche A est noir, gris, vert, avec des couleurs **caractérisées par** des valeurs différentes dans le nuancier RAL.

11. Feuille conforme à l'une des revendications 1 à 10 précédentes, dans laquelle le mélange-maître contenant un agent colorant présent dans le mélange de départ pour la couche C est blanc, l'agent colorant étant de préférence du dioxyde de titane.

Fig. 1

EP 3 102 410 B1

## REFERENCES CITED IN THE DESCRIPTION

### Patent documents cited in the description

- FR 08161121
- EP 2483071 A
- EP 2010064551 W
- EP 1638770 A
- WO 2011039303 A
- WO 2011038303 A